# DEMANDE DE BREVET EUROPEEN

(11) **EP 0 818 425 A1**
(43) Date de publication de la demande: **14.01.1998**
(21) Numéro de dépôt: 97401569.5
(22) Date de dépôt: 03.07.1997
(51) Int. Cl.: C03B 37/022, C03B 37/075, D04H 1/58

(54) **Matériau à base de fibres minérales**

(30) Priorité: 11.07.1996 FR 9608707
(71) Demandeur: ISOVER SAINT-GOBAIN, F-92400 Courbevoie (FR)
(72) Inventeur: Caccini, Gian-Paolo, Valley Forge, PA 19482-0101 (US); Berthier, Guy, Agnetz 60600 Clermont (FR); Bernard, Jean-Luc, Giencourt 60600 Clermont (FR)
(74) Mandataire: Renous Chan, Véronique

(57) **Abrégé**

L'invention a pour objet un matériau à base de fibres minérales, dont au moins une partie sont des fibres « multi-composantes » et dont la cohésion et / ou la géométrie est (sont) assurée(s), au moins en partie, par un encollage.

Elle a également pour objet l'utilisation de ce matériau pour l'isolation thermique et/ou acoustique.

## Description

L'invention se rapporte à des matériaux à base de fibres minérales, et notamment ceux de ces matériaux qui sont destinés à entrer dans la composition de produits d'isolation thermique et/ou acoustique ou de substrats hors-sol. L'invention s'applique plus particulièrement à la production industrielle de laine de verre, ou de roche, obtenue généralement par des techniques de fibrage dites de centrifugation interne.

Ce type de technique a été et est encore actuellement très largement utilisé pour fabriquer des fibres que l'on peut qualifier de globalement « mono-composantes » (c'est-à-dire, dans le contexte de l'invention, obtenues à partir d'un seul type de matériau minéral fondu. Très schématiquement, la centrifugation interne consiste à introduire un filet d'une matière minérale fondue donnée, de type composition verrière, dans un centrifugeur, encore appelé assiette de fibrage, tournant à grande vitesse et percé à sa périphérie d'une multitude d'orifices par lesquels la matière fondue est projetée sous forme de filaments sous l'effet de la force centrifuge. Ces filaments sont ensuite étirés en fibres et entraînés vers un organe collecteur pour y former une nappe de fibres, sous l'effet d'un courant annulaire d'étirage à température et vitesse élevées longeant l'assiette de fibrage.

Pour assurer l'assemblage des fibres entre elles, on projette une composition d'encollage sur les fibres lors de leur trajet vers l'organe récepteur, composition contenant usuellement une résine thermodurcissable. La nappe de fibres collectées est ensuite soumise à un traitement thermique, en étuve pour durcir/réticuler la résine, et ainsi obtenir un produit fibreux présentant les propriétés désirées, telles que la stabilité dimensionnelle, la résistance mécanique à la traction, la reprise d'épaisseur après compression ou le choix dans les densités et les épaisseurs des produits.

Pour plus de détails sur la technique, on se reportera avantageusement, par exemple, aux brevets EP-0 091 381, EP-0 091 866, EP-0 131 524, EP-0 484 211, EP-0 480 778 ou EP-0 519 797.

Cependant, on a cherché à toujours améliorer la qualité de ces produits, notamment en termes de pouvoir isolant, de « gonflant » ou de capacité à la reprise d'épaisseur après compression, propriétés dépendant de nombreux paramètres dont la densité du produit, la dimension des fibres qui le composent, ou encore le taux et la répartition de la composition d'encollage.

Il a alors été développé une adaptation de la technique de centrifugation interne précédemment décrite, adaptation consistant, très schématiquement encore, à alimenter avec deux filets de verre présentant des compositions chimiques différentes, chacun des orifices de l'assiette de fibrage. Les compositions de verre étant choisies de manière à présenter des coefficients de dilatation thermique différents, les fibres obtenues se trouvent être des fibres « bi-composantes » qui, en se refroidissant, présentent une grande souplesse, et un aspect « curviligne » conférant au produit final un aspect particulièrement aéré, particulièrement « gonflant », avec une excellente reprise d'épaisseur après compression. Toute opération d'encollage devient alors superflue, voire incompatible avec cette nouvelle technique, qui impose souvent un traitement thermique de la nappe de fibres, une fois formée sur ligne, à au moins 370°C jusqu'à 590°C, températures qui dégraderaient la résine de l'encollage au-delà de son durcissement par polymérisation / réticulation.

Pour plus de détails sur ce fibrage à partir de plusieurs compositions minérales, on peut se reporter au brevet US-2 998 620 ou au brevet plus récent WO-95/12552.

Les produits fibreux à base de ces fibres « bi-composantes » présentent par ailleurs certains inconvénients : le mode même de l'obtention de ces fibres très particulières ne peut conduire, dans l'état actuel des connaissances qu'à des produits à faible densité d'utilisation, par exemple de l'ordre de 8 à 10 kg/m³. Or de nombreuses applications, aussi bien dans le domaine de l'isolation thermique que de l'isolation acoustique, exigent des matériaux fibreux bien plus denses, atteignant par exemple jusqu'à 100 à 110 kg/m³. L'autre inconvénient non négligeable qu'il faut souligner est le fait que l'on ne maîtrise que très peu, dans ce cas, la forme géométrique de la nappe de fibres que l'on collecte en sortie de ligne de fabrication : aucune stabilité dimensionnelle n'est garantie, notamment en ce qui concerne l'épaisseur du produit. Industriellement, la seule solution est en fait d'ensacher ces produits à l'aide d'une enveloppe en plastique souple, opération coûteuse et n'apportant pas entièrement satisfaction puisque, si elle autorise une manipulation plus aisée du produit, elle ne pallie pas au problème de l'absence de contrôle de la géométrie du produit final.

L'invention a alors pour but de surmonter tous ces inconvénients, notamment en mettant au point un matériau fibreux qui puisse parvenir à concilier les avantages des matériaux fibreux à base de fibres « mono-composantes » avec ceux des matériaux fibreux à base de fibres « bi-composantes ».

L'invention a pour objet un matériau à base de fibres minérales, dont au moins une partie sont des fibres « multi-composantes », notamment « bi-composantes ». Afin d'assurer, au moins en partie, la cohésion et/ou la géométrie du matériau, les fibres sont encollées.

Dans le contexte de l'invention, on comprend par « multi-composantes », les fibres obtenues par centrifugation conjointe d'une pluralité de compositions minérales présentant tout particulièrement des coefficients de dilation thermique différents, à l'aide d'assiette de fibrage. Le mode de réalisation le plus simple de ces fibres « composites » consiste à fibrer deux compositions conjointement, on a alors des fibres « bi-composantes ».

Choisir d'encoller des fibres « multi-composantes » est extrêmement avantageux sur le plan industriel : en effet, on parvient à conserver à ces matériaux fibreux assez particuliers leurs propriétés intrinsèques, qui sont notamment leur aspect « gonflant », leur reprise d'épaisseur après compression très élevée. Les encoller permet de cumuler avec ces propriétés, d'autres propriétés également extrêmement importantes : l'encollage confère aux matériaux fibreux une stabilité dimensionnelle. Les nappes de fibres « multi-composantes » collectées au bas des organes de fibrage peuvent, grâce à la présence d'encollage les imprégnant, être conformées normalement. On obtient ainsi au final des produits sous forme de panneaux pré-découpés ou d'enroulements de matelas qui sont parfaitement manipulables tels quels, sans avoir à les ensacher, et dont on peut choisir la forme, l'épaisseur et la densité de manière parfaitement contrôlée. Leur forme géométrique précisément définie permet de les assembler de façon jointive afin d'obtenir, par exemple, des revêtements d'isolation thermique de grande surface qui soient continus, sans pont thermiques dans les zones de jointoiement. En outre, le fait d'encoller des fibres « multi-composantes » autorise l'obtention de matériaux fibreux dans une large gamme de densité ou de grammage, alors que jusque là, les matériaux à base de fibres « bi-composantes » non encollées étaient cantonnés à de faibles densités. L'invention permet donc de diversifier très largement les applications jusque-là envisageables pour les matériaux à fibres « bi- ou multi-composantes ».

Cependant, il est important de souligner que choisir d'encoller ce type de fibre relève d'une démarche non évidente, qui va à l'encontre de la conception même des procédés de fibrage de fibres « multi-composantes », dont la mise au point a été faite justement en vue de supprimer tout encollage. Or on a finalement découvert, dans le cadre de la présente invention que le fait d'avoir des fibres « ondulées » ou curvilignes, qui ont donc une certaine tendance à s'entremêler, ne peut « compenser » totalement l'effet de l'encollage qui assure véritablement, de manière efficace, l'assemblage du matériau fibreux.

Le fait qu'imprégner les fibres avec un encollage de composition adéquate permettrait d'augmenter à volonté la densité des matériaux n'allait pas non plus de soi.

Il ne faut pas non plus négliger les problèmes que l'homme du métier pouvait prévoir en essayant d'incorporer un encollage à des fibres « multi-composantes ». En effet, comme mentionné précédemment, du fait de leur « ondulation », ces fibres ont une tendance qui leur est assez caractéristique, de s'assembler en sorte de mêches, ce que l'on observe très bien lorsqu'on tente, par exemple, d'en extraire une manuellement du matériau fibreux. Or ces « mèches » tendent à se créer lors du fibrage même, c'est-à-dire entre la partie inférieure de l'assiette de fibrage et l'organe collecteur du type tapis convoyeur aspirant. Pulvériser une composition d'encollage à ce niveau, c'est-à-dire une opération classique dans le cas de fibres « mono-composantes », pouvait paraître risqué voire dommageable à la qualité du matériau fibreux final. Effectivement tout portait à croire que l'imprégnation s'effectuerait difficilement jusqu'à l'intérieur des mêches, ce qui conduirait à « figer » les mêches dans une « gangue « d'encollage après durcissement de celui-ci. On aurait dû donc s'attendre à des produits qui, en final, présenteraient des hétérogénéités d'aspect et de couleur et qui auraient perdu, au moins en partie, la qualité des fibres bi-composantes.

Or, de manière surprenante, il s'est avéré que l'opération d'encollage des fibres « multi-composantes » n'a pas rencontré les problèmes escomptés : l'imprégnation des fibres à l'aide d'une couronne de pulvérisation de composition d'encollage de manière usuelle, entre les assiettes de fibrage et l'organe récepteur s'est effectuée correctement, conduisant à l'obtention d'un produit particulièrement homogène dans son aspect (coloration tout-à-fait uniforme dans l'épaisseur du matériau fibreux) et dans ses propriétés mécaniques (résistance mécanique à la traction et à la flexion uniforme), et qui n'avait pas perdu le « gonflant » potentiel ni la reprise d'épaisseur en compression caractéristiques des fibres « bi-composantes » dépourvues d'encollage.

Il va de soi que l'invention n'est pas limitée à l'obtention de matériaux fibreux uniquement composés de fibres « multi-composantes » encollées, mais également à des matériaux qui associent ce type de fibres à des fibres « mono-composantes ».

Les fibres « multi-composantes » préférées dans le cadre de l'invention présentent une répartition de leur diamètre moyen qui a approximativement la forme d'une courbe de Gauss. Avantageusement, au moins 50% des fibres ont un diamètre moyen centré sur une gamme de 6 à 10 micromètres, moins de 10% ont un diamètre inférieur à 4 micromètres, et encore moins de 10% ont un diamètre supérieur à 13 micromètres. Cette répartition assez « ciblée » est particulièrement propice à l'uniformité des propriétés des produits fibreux en final.

Les caractéristiques de longueur préférées des fibres « multi-composantes » utilisées dans l'invention sont un peu plus délicates à évaluer, dans la mesure où, comme déjà mentionné, elles tendent à former des mêches. Avantageusement, ces mêches sont relativement longues, par exemple d'au moins 30 millimètres, notamment d'au moins 40 à 60 millimètres. On peut noter à ce propos que ces mêches, finalement, ne pénalisent pas les performances du produit final, les inventeurs n'ayant pas cherché à prévenir leur formation, alors même qu'il est usuel de considérer leur présence comme un facteur d'hétérogénéité. L'encollage adéquatement réparti permet de contre-balancher ces phénomènes d'agglomération, en maintenant globalement le matériau fibreux dans des formes géométriques précises, présentant de surcroît une résistance élevée à l'arrachement et à la traction.

Les matériaux fibreux selon l'invention peuvent présenter des densités très variables, notamment comprises entre 7 et 110 kg/m³. Grâce à la présence d'encollage, on atteint donc, si on le souhaite, de fortes densités, en ajustant alors de manière appropriée le taux d'encollage et en adaptant la technique de conformation, notamment par calandrage. De manière connue, le réglage du grammage de la nappe de fibres collectées au bas des organes de fibrage peut être effectué en adaptant le fonctionnement de l'organe collecteur qui doit évacuer la nappe de fibres hors de la zone de fibrage. Il suffit le plus souvent de régler en conséquence la vitesse du tapis convoyeur aspirant remplissant l'office d'organe collecteur.

On ajuste le taux d'encollage en fonction de nombreux paramètres, tout particulièrement en fonction de la densité de produit recherchée ou du niveau de résistance mécanique voulu. En règle générale, les matériaux fibreux selon l'invention présentent en poids un taux d'encollage par rapport aux fibres d'au moins 1,5%, notamment d'au moins 2% à 20%, et de préférence compris entre 3 et 11%.

La composition d'encollage comporte usuellement une solution aqueuse comprenant un liant minéral ou organique. Le liant minéral peut être notamment à base de silicate de soude ou de phosphate mono-, bi- ou tri- aluminique. Le liant, s'il est organique, peut être à base de résine(s) thermoplastique(s) ou thermodurcissable(s). Comme type de résine thermoplastique, on peut citer par exemple les émulsions de latex, des dérivés ou copolymères de caoutchouc et/ou de polystyrène, comme par exemple le butadiène styrène.

Comme type de résine thermodurcissable, on choisit notamment des phénoplastes et/ou aminoplastes, par exemple obtenues par condensation de phénol, formaldéhyde et éventuellement d'urée ou encore de mélamine et/ou d'une amine du type amine de Mannich. ll peut aussi s'agir d'une résine époxy du type éther glycidylique associée à un durcisseur aminé.

La composition d'encollage préférée consiste en une solution aqueuse contenant au moins une résine thermodurcissable, l'eau étant éliminée et la résine réticulée au cours du traitement ultérieur des fibres en nappe. Cette résine, après réticulation, va assurer l'essentiel de l'effet « collant » de l'encollage.

La composition d'encollage peut aussi contenir des additifs, notamment choisis parmi les groupes des agents surfactants, du type tensioactif ionique ou non-ionique, ou encore des agents lubrifiants du type huile minérale, des agents de dilution, des agents colorants ou même des charges, des agents promoteurs d'adhérence sur les fibres du type silane ou aminosilane, des catalyseurs pour la réticulation de la résine comme le sulfate d'ammonium, de l'ammoniaque servant à retarder la prégélification de l'encollage.

Pour plus de détails sur des compositions d'encollage, on se reportera avantageusement au brevet EP-0 148 050, qui décrit un encollage utilisant une résine composée de condensats de phénol-formaldéhyde et urée-formaldéhyde présentant un taux de phénol libre et de formaldéhyde libre respectivement inférieurs à 0,5% et 3%, un diluabilité à l'eau mesurée à 20°C, au moins égale à 1000%, et une teneur en extrait sec au moins égale à 40%. Cette résine résulte de la condensation de formaldéhyde et de phénol utilisés dans un rapport molaire compris entre 3 et 6, en présence d'un catalyseur basique en quantité correspondant à 12 à 20 moles OH⁻ pour 100 moles de phénol initial, à une température comprise entre 60°C et 75°C, de préférence à 70°C environ, jusqu'à l'obtention d'un taux de conversion du phénol supérieur à 98%, et au plus pendant une durée n'excédant pas 90 min, puis du refroidissement du milieu réactionnel à une vitesse de l'ordre de 1°C/min jusqu'à 35°C environ, et de la condensation du formaldéhyde en excès avec de l'urée ajoutée en quantité telle que le rapport molaire U/P soit compris entre (F/P - 2,55) / 2,6 et (F/P -2,55) / 0,7 et de préférence entre (F/P - 2,55) / 1,8 et (F/P - 2,55) / 0,8, l'introduction de l'urée ayant lieu progressivement, au cours du refroidissement, en une durée au moins égale à la moitié de la durée du refroidissement du milieu réactionnel.

On peut aussi se reporter au brevet EP-0 305 249, qui décrit une composition d'encollage comprenant une résine thermodurcissable à base de mélamine, urée et formaldéhyde, de l'urée, éventuellement un ou plusieurs additifs d'encollage et, comme composé supplémentaire d'encollage, un composé polyméthylolé de fonctionnalité au moins égale à trois. On peut aussi mentionner le brevet EP-0 369 848, concernant un encollage à base d'une résine époxy du type éther glycidylique dispersable dans de l'eau, d'un durcisseur aminé dont le point éclair est supérieur à 180°C et d'additifs (en parts calculées pour 100 parts en résine sèche) dont notamment 0.1 à 2% de silane et 0 à 15% d'une huile minérale, la résine époxy ayant de préférence un indice de polymérisation inférieur à 1 et le durcisseur une masse molaire équivalente NH inférieure à 100 g. Il peut aussi s'agir d'un encollage du type de celui décrit dans le brevet EP-0 480 778, et qui comporte une résine composée essentiellement des condensats de phénol-formaldéhyde (P-F), d'urée-formaldéhyde (U-F) et de phénol-formaldéhyde-amine (P-F-A), l'amine A étant choisie parmi celles qui permettent une réaction du type Mannich, comme des alkanolamines, comme la monoéthanolamine (MEA), la diéthanolamine (DEA), des amines cycliques comme la pipéridine, la pipérazine et la morpholine.

Par ailleurs, l'invention a pour objet l'application du matériau fibreux prédéfini, sous des formes diverses, dont les matelas susceptibles d'être enroulés en vue de leur stockage et de leur transport avant emploi, de panneaux pré-découpés, de flocons, de coquilles, de substrats hors-sol. On comprend par « flocons » au sens de l'invention de la laine minérale se présentant sous forme de modules obtenus par traitement mécanique pour insufflation, soufflage ou déversement. De préférence, ces flocons présentent un diamètre compris entre 5 et 20 millimètres. (Par commodité, on utilise ici le terme de diamètre pour évaluer la taille des flocons, sachant que ceux-ci ne sont pas nécessairement exactement sphériques).

Les matelas ou panneaux selon l'invention sont aptes à présenter une reprise d'épaisseur après compression à 1/20ème de leur épaisseur initiale pendant 72 heures d'au moins 110%, notamment d'au moins 120% de leur épaisseur « nominale » (c'est à dire l'épaisseur minimale garantie à l'utilisateur final après décompression). Cela vérifie que les propriétés de souplesse des fibres « multi-composantes » sont largement conservées.

Ces matériaux fibreux présentent avantageusement une conductivité thermique λ d'environ 40 à 47mW.m⁻¹.K⁻¹ pour une densité d'environ 14 à 9 kg/m³, notamment une conductivité thermique λ d'environ 42 à 45 mW.m⁻¹.K⁻ pour une densité d'environ 12 à 10 kg/m³ ce qui traduit une bonne performance d'isolation thermique à densité donnée. Avec des matériaux fibreux de densité plus élevée, notamment de l'ordre de 25 à 35 kg/m³, on atteint des valeurs de conductivité thermique λ d'environ 32 à 36 mW.m⁻¹.K⁻

Les panneaux ou matelas obtenus à partir des matériaux fibreux peuvent être munis sur au moins une de leurs faces d'un revêtement superficiel « mono- ou multi-couche » comprenant par exemple au moins une couche à but décoratif du type voile de fibres de verre que l'on pourra peindre. Il peut aussi comporter au moins une couche d'imperméabilisation à l'eau et/ou à la vapeur du type film métallique comme un film d'aluminium et/ou un film plastique du type polyéthylène. Un revêtement de surfaçage associant un film d'aluminium d'épaisseur au plus 9 micromètres et un film thermocollant en polyéthylène d'un grammage inférieur à 40 g/m² a été ainsi décrit dans le brevet européen EP-0 327 428. On peut ainsi ne recouvrir que l'une des faces du panneau du matelas, pour des raisons esthétiques ou pour constituer une barrière pare-vapeur, mais il n'est pas nécessaire de l' ensacher totalement.

Tous les matériaux fibreux selon l'invention peuvent être utilisés dans le domaine du bâtiment, notamment pour l'isolation thermique et/ou acoustique,et/ou l'étanchéité des murs, toitures, combles, faux-plafonds, sols..

Ces matériaux sont également avantageusement utilisés dans d'autres domaines, par exemple celui des moyens de transport tels que les automobiles, les trains, avions, bâteaux.

Il est à noter que les matériaux fibreux de l'invention se prêtent aisément à l'isolation thermique ou acoustique de parois verticales, dans des bâtiments, sans nécessiter d'ensachage, les panneaux ou matelas ayant une forme géométrique bien défini et étant manipulables aisément tels quels. Au contraire, des matériaux fibreux qui ne sont constitués que de fibres « bi-composantes » dénuées d'encollage ne peuvent convenir pour isoler des parois verticales : même ensaché, le matériau « informe » s'y prête mal.

L'invention a également pour objet le procédé d'obtention du matériau fibreux précédemment décrit, qui comporte la fabrication de fibres « bi-composantes » par centrifugation de deux compositions minérales différentes alimentant conjointement une pluralité d'orifices d'un centrifugeur, de manière à ce que des filaments « bi-composants » s'en échappent. Les filaments sont étirés en fibres par des moyens du type brûleur périphérique annulaire. On projette sur les fibres une composition d'encollage sur leur trajet vers un organe récepteur, on collecte les fibres encollées sur ledit organe sous forme de nappe puis on durcit l'encollage, notamment par passage de la nappe dans une enceinte chauffée de 100 à au plus 300°C, notamment à environ 200°C.

L'invention sera maintenant décrite plus en détails à l'aide d'un exemple de réalisation non limitatif d'un matériau fibreux à partir de fibres « bi-composantes ».

Avant de définir leur mode d'obtention, nous décrivons les matières premières nécessaires au fibrage de fibres « bi-composantes ». Ces compositions de verre destinées à être fondues sont choisies de façon à avoir des coefficients de dilatation thermique significativement différents. On les choisit par exemple parmi celles décrites dans le brevet US-2 998 620 précité.
□ La composition d'encollage utilisée est une solution aqueuse à 10 % en poids des éléments suivants :
   - une résine à base de condensats phénol-formaldéhyde et urée-formaldéhyde à 39 %, diluée dans l'eau à 12,5%
   - un silane à 2 %, commercialisé par la société OSIS sous l'appellation A1100, dilué dans l'eau à 0,13%
   - de l'urée à 40 %, dilué dans l'eau à 10%
   - une huile minérale à 50 %, diluée dans l'eau à 1,7 %, commercialisée par la société MOBIL OIL COMPANY sous l'appellation Mulrex
   - du sulfate d'ammonium à 20 %, dilué dans l'eau à 1,3 %
   - de l'ammoniaque liquide à 20 %, dilué dans l'eau à 0,5 %.

La résine est obtenue à partir de phénol et de formaldéhyde dans un rapport molaire du formaldéhyde sur le phénol F/P égal à 3,2/1, en présence d'un catalyseur basique du type BaO en quantité correspondant à 4,5 moles pour 100 moles de phénol initial, à une température d'environ 60 à 75°C jusqu'à obtention d'un taux de conversion de phénol libre d'au moins 1,0 %.

La fabrication du matériau fibreux selon l'invention se déroule de la façon suivante :

Conformément au principe de centrifugation interne « conjointe » décrit notamment dans le brevet US-2 998 620, on alimente une assiette de fibrage en continu avec un filet de verre fondu présentant la composition A décrite dans ce brevet avec un filet de verre fondu présentant la composition D décrite dans ce brevet. Sous l'effet de la force centrifuge et de la conception adaptée des orifices dont est munie l'assiette, des filaments bi-composants sont éjectés des orifices puis étirés à l'aide d'un brûleur annulaire générant une couronne de gaz chaud sous l'assiette. Les fibres ainsi formées sont ensuite imprégnées de la composition d'encollage précédemment décrite, des organes de soufflage annulaires venant ensuite guider les fibres encollées sur un tapis convoyeur aspirant dont la vitesse va permettre de régler le grammage du produit final. La nappe ainsi formée est amenée dans une étuve à 200°C et munie de bandes sans fin de conformation inférieure et supérieure, de façon à réticuler la résine et à conformer la nappe à l'épaisseur souhaitée et donc à la densité souhaitée. Le matelas obtenu a une densité de 11 kg/m³, une épaisseur nominale de 80 mm , des bords bien nets et rectilignes, un taux d'encollage en poids de 4,5 % mesuré par perte au feu. Il est aisément manipulable, ne relargue pas de poussières et présente une coloration uniforme.

En prélevant une éprouvette sur ce matelas, on a fait l'histogramme de la répartition des diamètres de fibres du matelas. Elles se répartissent approximativement selon une Gaussienne, avec plus de 55% des fibres ayant un diamètre centré sur une gamme de 6 à 10 micromètres, moins de 10% des fibres ayant un diamètre inférieur ou égal à 3 micromètres et moins de 5% de fibres ayant un diamètre supérieur à 14 micromètres. Le diamètre moyen est de 7,5 micromètres et l'écart-type de 3,4 micromètres.

Des tests comparatifs ont été effectués sur :
- le matelas fibreux selon l'invention;
- un matelas fibreux A fait à partir de fibres « bi-composantes » identiques à celles du produit selon l'invention mais totalement dépourvues d'encollage;
- un matelas fibreux B fait à partir de fibres « mono-composantes » standard obtenues par centrifugation interne de composition verrière classique et qui sont encollées à 4,5 % en poids avec la même composition d'encollage que celle utilisée pour le matelas selon l'invention.

Les trois matelas sont de même densité : 1 kg/m³

Les tests sont les suivants :
- mesure de la résistance à la traction RT, en gf/g, sur des éprouvettes en forme d'anneau étirées par deux tiges intérieures, conformément à la norme ASTM C 686 - 71 T;
- mesure de la reprise d'épaisseur RE, en pourcentage. Cette mesure consiste à comprimer un échantillon de matelas perpendiculairement à son plan, de manière à réduire son épaisseur à 1/20ème de son épaisseur initiale libre qui est ici de 80 mm, compression que l'on maintient pendant 72 heures. Une fois la compression relâchée, on mesure l'épaisseur de l'échantillon en pourcentage de l' épaisseur dite « nominale », ici de 50 mm, qui est l'épaisseur minimale que l'on garantit à l'utilisateur; (pour le matelas B, la mesure a été faite après compression à 1/15ème et non pas à 1/20ème de l'épaisseur initiale).
- mesure de la conductivité thermique λ en mW.m⁻¹.K⁻¹
- mesure de la perméabilité à l'air PA, en rayl/cm, selon la norme ASTM C 5 22;
- mesure du diamètre moyen DM des fibres constitutives des matelas, en micromètres;
- mesure du micronaire M, selon la norme britannique BS 3181 : 1968, sans unité, qui consiste à déterminer le débit d'air traversant un échantillon de matériau fibreux d'une masse donnée, ici de 5 grammes, qui est placé dans un compartiment situé sur un circuit dans lequel circule de l'air sous pression définie.

Le tableau 1 ci-dessous regroupe les résultats de ces différents tests pour les trois matelas :

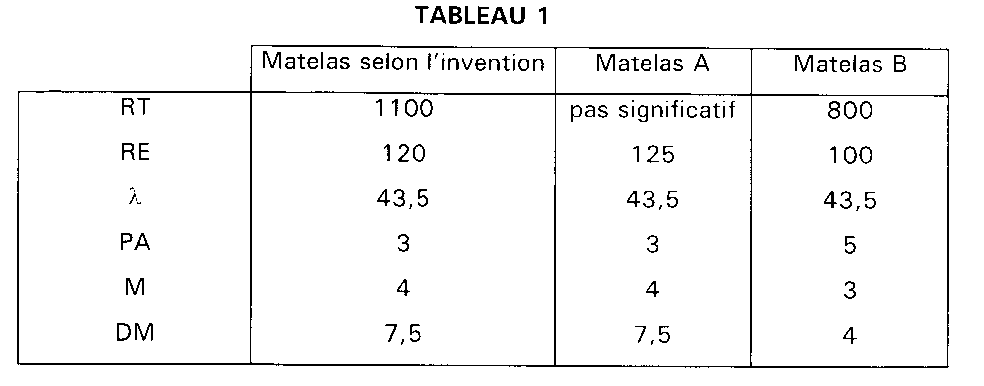

De ce tableau peuvent être tirées les conclusions suivantes :

Le matelas selon l'invention cumule les propriétés des matelas de type A et de type B. Ainsi, il offre une reprise d'épaisseur élevée, 120%, à taux de compression pourtant élevé, ce qui est très avantageux : les matériaux selon l'invention peuvent donc être stockés et transportés à l'état comprimé, dans un minimum de volume, sans que leurs propriétés ne se dégradent une fois décomprimés. On retrouve notamment l'épaisseur et le gonflant du produit avant compression. On peut ainsi garantir sans problème à l'utilisateur final une épaisseur minimale garantie après décompression, l'épaisseur dite « nominale », tout en réalisant des gains de volume à transporter et à stocker très importants. ll faut souligner qu'en règle générale, les produits standard de type B, c'est à dire à partir de fibres mono-composantes encollées, ne sont usuellement comprimés qu'au sizième de leur épaisseur et non au vingtième, pour être à même de garantir une épaisseur minimale donnée après décompression. (il va de soi que si l'on fait le choix de comprimer au sizième seulement le matelas selon l'invention, la RE peut alors largement dépasser 120%, par exemple être d' au moins 135%).

Par ailleurs, on peut vérifier que le matelas selon l'invention a des propriétés d'isolation thermique au moins aussi bonnes que celles du matelas B fait à partir de fibres standard. Or, pourtant, les fibres utilisées dans le matelas selon l'invention ont un diamètre moyen près de deux fois supérieur à celui des fibres utilisées dans le matelas B. C'est un point très intéressant de parvenir à maintenir le même niveau de pouvoir isolant avec des fibres nettement plus « épaisses » , car ces dernières sont généralement bien plus facile à fibrer.

On peut aussi souligner les bonnes performances mécaniques du matelas selon l'invention par rapport aux matelas A et B et tout particulièrement par rapport au matelas A dont la résistance à la traction est très peu élevée.

## Revendications

1. Matériau à base de fibres minérales dont au moins une partie sont des fibres « multi-composantes », notamment « bi-composantes », ***caractérisé en ce que*** la cohésion et/ou la géométrie dudit matériau est (sont) assurée(s), au moins en partie, par l'encollage des fibres.

2. Matériau selon la revendication 1, ***caractérisé en ce que*** les fibres « multi-composantes » sont des fibres « bi-composantes » obtenues par étirage/centrifugation conjointe de deux compositions minérales différentes, notamment deux verres présentant des coefficients de dilatation thermique différents.

3. Matériau selon l'une des revendications précédentes, ***caractérisé en ce que*** les fibres sont, au moins en partie, associées les unes aux autres sous forme de « mêches » de longueur d'au moins 30 millimètres, notamment d'au moins 40 à 60 millimètres.

4. Matériau selon l'une des revendications précédentes, ***caractérisé en ce qu'***il présente une densité comprise entre 7 et 110 kg/m³.

5. Matériau selon l'une des revendications précédentes, ***caractérisé en ce qu'il*** présente un taux en poids d'encollage par rapport aux fibres d'au moins 1,5%, notamment d'au moins 2% à 20%, de préférence compris entre 3 et 11%.

6. Matériau selon l'une des revendications précédentes, ***caractérisé en ce que*** la composition d'encollage comprend une résine thermodurcissable du type phénoplaste et/ou aminosplaste, notamment obtenue par condensation à partir de phénol-formaldéhyde, éventuellement urée, mélamine et/ou une amine du type amine de Mannich, ou une résine époxy du type éther glycidylique associée à un durcisseur aminé.

7. Matériau selon l'une des revendications précédentes, ***caractérisé en ce que*** la composition d'encollage comprend une résine thermoplastique, notamment de type dérivé de latex, caoutchouc, styrène.

8. Matériau selon l'une des revendications 1 à 6, ***caractérisé en ce que*** la composition d'encollage comprend un liant minéral, notamment du type silicate de soude ou phosphate mono-, bi- ou tri- aluminique.

9. Matériau selon l'une des revendications précédentes, ***caractérisé en ce que*** la composition d'encollage comprend au moins un additif, notamment choisi dans le groupe des agents surfactants, agents lubrifiants, agents de dilution, agents colorants, charges, agents promoteurs d'adhérence aux fibres.

10. Matériau selon l'une des revendications précédentes, ***caractérisé en ce qu'il*** se présente sous la forme de matelas, de panneaux, de flocons, de coquilles, de substrats de cultures hors-sol.

11. Matériau selon la revendication 10, ***caractérisé en ce qu'*** il se présente sous forme de flocons de diamètre compris entre environ 5 et 20 mm.

12. Matériau selon l'une des revendications précédentes, ***caractérisé en ce qu'il*** se présente sous la forme de matelas ou de panneau ayant une reprise d'épaisseur après compression à 1/20ème d'épaisseur d'au moins 110 %, notamment d'au moins 120%.

13. Matériau selon l'une des revendications précédentes, ***caractérisé en ce qu'il*** présente une conductivité thermique λ d'environ 40 à 47 mW.m⁻¹.K⁻¹ pour une densité d'environ 14 à 9 kg/m³.

14. Matériau selon l'une des revendications 1 à 12, ***caractérisé en ce qu'*** il présente une conductivité thermique λ d'environ 32 à 36 mW.m⁻¹.K⁻¹ pour une densité d'environ 25 à 35 kg/m³.

15. Matériau selon l'une des revendications précédentes, ***caractérisé en ce qu'il*** se présente sous la forme de panneau ou de matelas muni sur au moins une de ses faces d'un revêtement superficiel mono- ou multi-couche comprenant par exemple au moins une couche décorative du type voile de fibres de verre et/ou au moins une couche d'imperméablisation à l'eau et/ou à la vapeur du type film d'aluminium et/ou film plastique tel que le polyéthylène.

16. Application du matériau selon l'une des revendications précédentes à l'isolation thermique et/ou acoustique.

17. Procédé d'obtention du matériau selon l'une des revendications 1 à 15, ***caractérisé en ce*** qu'on fabrique les fibres bi-composantes :
- en centrifugeant deux compositions minérales différentes alimentant conjointement une pluralité d'orifices d'un centrifugeur, de manière à ce que des filaments bi-composants s'en échappent,
- en étirant par des moyens de type brûleur périphérique annulaire les filaments en fibres,
- en projetant sur les fibres une composition d'encollage sur leur trajet vers un organe récepteur,
- en collectant les fibres encollées sur ledit organe sous forme de nappe,
- en durcissant l'encollage, si nécessaire, notamment par passage de la nappe dans une enceinte chauffée à une température de 100 à au plus 300°C.
